# EUROPEAN PATENT SPECIFICATION

(11) **EP 3 336 337 B1**
(45) Date of publication and mention of the grant of the patent: **27.01.2021**
(21) Application number: 16204329.3
(22) Date of filing: 15.12.2016
(51) Int. Cl.: F02D 41/02, F02D 41/14, F02D 41/30, F02D 41/40, F02D 19/06, F02D 19/08, F02D 35/00, F02D 35/02, F02D 41/00

(54) **METHOD OF OPERATING A GASEOUS FUEL INTERNAL COMBUSTION ENGINE**
VERFAHREN ZUM BETREIBEN EINES VERBRENNUNGSMOTORS MIT GASFÖRMIGEM BRENNSTOFF
PROCÉDÉ D'OPÉRATION D'UN MOTEUR À COMBUSTION INTERNE À COMBUSTIBLE GAZEUX

(43) Date of publication of application: 20.06.2018
(73) Proprietor: Caterpillar Motoren GmbH & Co. KG, 24159 Kiel (DE)
(72) Inventor: Sixel, Eike Joachim, 24109 Kiel (DE); Wester, Daniel, 24242 Felde (DE); Wolfgramm, Marius, 24116 Kiel (DE); Graumüller, Robert, 24103 Kiel (DE)
(74) Representative: BRP Renaud & Partner mbB Rechtsanwälte Patentanwälte Steuerberater

(56) References cited:
- EP-A1- 2 806 145
- WO-A1-2013/022630
- WO-A1-2014/114846
- WO-A1-2015/020867
- US-A- 5 229 946
- US-A1- 2005 177 300
- US-A1- 2014 209 066
- US-A1- 2016 169 132
- US-A1- 2016 169 133
- US-B1- 6 289 871

## Description

### Technical Field

The present disclosure generally relates to a gaseous fuel internal combustion engine and a method of operating the same, in particular, to a method of adjusting a pilot injection of liquid fuel in order to achieve a reliable combustion.

### Background

Generally, during operation of a gas or dual fuel engine with gaseous fuel, a mixture of gaseous fuel and air is ignited by injecting a pilot injection of liquid fuel at a predetermined injection timing. This is sometimes referred to as Caterpillar Ignition Shot Strategy (CISS). The pilot injection is supplied by a pilot injector configured to supply a small amount of liquid fuel, for example, at a predetermined crank angle before the top dead center position of the piston of the associated cylinder.

For example, US 2015/0285178 A1 discloses a reactivity controlled compression ignition engine which compression ignites a stratified reactivity charge mixture. During a transient condition, a combustion phasing control includes adjustments to quantities and timings of at least three injection sequences of high reactivity fuel.

US 2016/0169132 A1 discloses a system and a method for increasing a tolerance to fuel variation. A data collection module is configured to receive real-time cylinder pressure measurements and calculate one or more actual combustion parameter values. A comparison module is configured to receive the calculated combustion parameter values and compare the same to theoretical combustion parameter values to determine any difference therebetween. A process control module is configured to control a fuel injection of at least two different types of fuel in order to reduce any difference between the calculated actual combustion parameter values for each cylinder and the theoretical combustion parameter values.

US 2016/0169133 A1 discloses a similar system and a similar method for increasing a gaseous fuel substitution.

US 6,289,871 B1 discloses a method for achieving a minimum liquid pilot fuel delivery to each cylinder of a dual fuel engine.

WO 2013/022630 A1 discloses a method and an apparatus for controlling a premixed combustion in a multimode engine.

The present disclosure is directed, at least in part, to improving or overcoming one or more aspects of prior systems.

### Summary of the Disclosure

The aspects of the present disclosure are presented in the appended independent claims.

Other features and aspects of the present disclosure will be apparent from the following description and the accompanying drawings.

### Brief Description of the Drawings

Fig. 1 is a schematic view of an exemplary internal combustion engine in accordance with the present disclosure;
Fig. 2 is a schematic view of a control system in accordance with the present disclosure; and
Fig. 3 is an exemplary diagram illustrating injection timings and corresponding injection amounts in accordance with the present disclosure.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of protection. Rather, the scope of protection shall be defined by the appended claims.

The present disclosure may be based in part on the realization that, using CISS combustion, it is difficult to control the combustion over the whole operating range of the engine and at every possible ambient condition (for example, fuel quality, air temperature and pressure, humidity, etc.). Although the combustion stability can be improved by having the pilot injector perform multiple injections to achieve a better distribution of the high reactivity fuel and a stable and reliable ignition and combustion, it can be difficult to find the right balance between a reliable combustion and low NOx emissions in view of the relatively large amount of injected ignition fuel. Further, the optimum amount of ignition fuel may also depend on the ambient conditions.

In view of the above problems, the present disclosure is based at least in part on the realization that it is possible to use a base definition of timings and injection amounts for one or more pilot injections, which achieve a reliable combustion using a standard fuel under standard (ISO) ambient conditions. Operating the engine under such standard operating conditions, for example, a standard burn rate profile comprising values for a start of combustion (SOC), center of combustion (COC) and/or duration of combustion (DOC) associated with the combustion in a cylinder can be determined. Then, during operation of the engine, a combustion parameter is determined based on measurements performed for the cylinder, and said combustion parameter is compared to the corresponding standard profile determined in the above-described manner. If a deviation is found in a given combustion cycle, the ignition fuel injection is adapted for the subsequent cycle in order to achieve a desired combustion characteristic, i.e., a reliable combustion in line with the standard combustion profiles.

Further, the present disclosure may be based on the realization that the above-mentioned balance between a reliable combustion and low NOx values can be achieved by performing further adjustments based on measured NOx values of the exhaust gas. For example, a NOx sensor may be provided in the exhaust system of the engine, and in case NOx values that are too high are detected, appropriate counter-measures may be taken. For example, a charge air pressure may be increased.

The present disclosure may also be based at least in part on the realization that cylinder pressure measurements, for example, by a pressure sensor associated with each cylinder, may be used to derive the combustion parameter or combustion profile used for the comparison. In particular, the pressure sensor associated with, for example, a pre-installed knock detection system of the engine may be used in an advantageous manner. In other embodiments, different sensors may be used, for example, for a measurement of the exhaust gas temperature or the like.

Generally, the present disclosure is based on the realization that a desired combustion profile can be achieved by reducing or increasing an amount of ignition fuel that is supplied to each cylinder, and/or by increasing or decreasing a number of injections by the associated pilot injector.

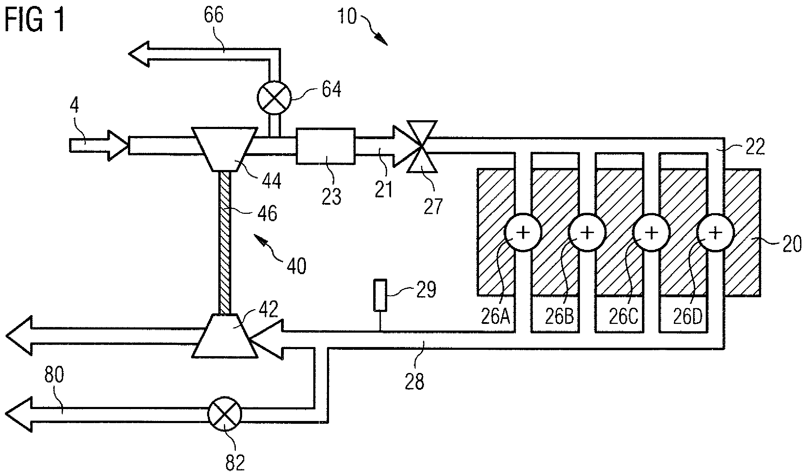

Referring now to the drawings, an exemplary embodiment of an internal combustion engine 10 is illustrated in Fig. 1. Internal combustion engine 10 may include features not shown, such as fuel systems, air systems, cooling systems, peripheries, drive train components, etc. In the embodiment, internal combustion engine 10 is a dual fuel engine. One skilled in the art will recognize, however, that internal combustion engine 10 may be any type of gaseous fuel internal combustion engine that utilizes a pilot injector that injects liquid fuel to ignite a mixture of gaseous fuel and air for combustion, for example, a diesel gas engine.

Internal combustion engine 10 may be of any size, with any number of cylinders and in any configuration ("V", "in-line", etc.). Internal combustion engine 10 may be used to power any machine or other device, including ships or other marine applications, locomotive applications, on-highway trucks or vehicles, off-highway machines, earth-moving equipment, generators, aerospace applications, pumps, stationary equipment such as power plants, or other engine-powered applications.

Still referring to Fig. 1, internal combustion engine 10 comprises an engine block 20 including a bank of cylinders 26A-26D, a gaseous fuel supply (not shown), a liquid fuel tank (not shown), a turbocharger 40 associated with cylinders 26A-26D, and an intake manifold 22.

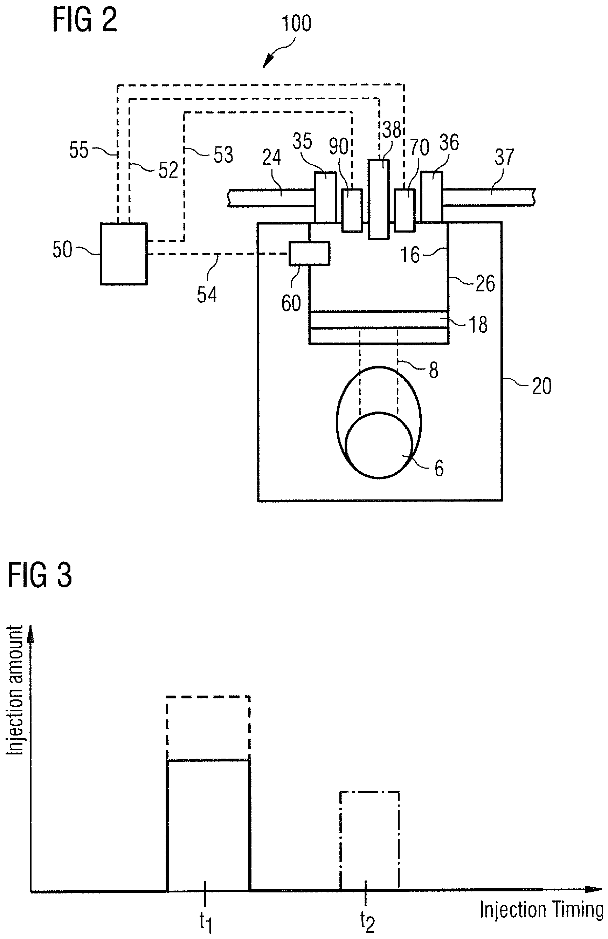

Engine block 20 includes a crank-case (not shown) within which a crank-shaft 6 (see Fig. 2) is supported. Crank-shaft 6 is connected to pistons 18 (see Figs. 2) that are movable within each of cylinders 26A-26D during operation of internal combustion engine 10.

Intake manifold 22 is at least temporarily fluidly connected to each of cylinders 26A-26D. Each of cylinders 26A-26D is provided with at least one inlet valve 35 (see Fig. 2) that is adapted to open or close a fluid connection between an intake passage 24 and a corresponding combustion chamber 16 of cylinders 26A-26D.

An exhaust manifold 28 is connected to each of cylinders 26A-26D. Each of cylinders 26A-26D is provided with at least one exhaust valve 36 disposed in an exhaust passage 37 (see Fig. 2) and being configured to open and close a fluid connection between combustion chamber 16 of each cylinder 26A-26D and exhaust manifold 28.

Generally, when internal combustion engine 10 is operated in gas mode, a mixture of gaseous fuel and air (in the following referred to as the "mixture") is introduced into the combustion chambers of the plurality of cylinders 26A-26D via an air inlet 4, intake manifold 22, inlet valves 35, which supply compressed intake air, and gas admission valves 38 (see Fig. 2), which supply gaseous fuel. After combustion, exhaust gases generated by the combustion process are released from cylinders 26A-26D through exhaust manifold 28. When internal combustion engine 10 is operated in liquid fuel mode, liquid fuel is introduced into the combustion chambers of the plurality of cylinders 26A-26D via a main injector 70 (see Fig. 2). The ignition of the main liquid fuel may be assisted by supplying a pilot injection of liquid fuel via a pilot injector that serves as an injection device 90 (see Fig. 2) in the gas mode.

An exhaust sensor 29 may be disposed in exhaust manifold 28 to detect a component of the exhaust from internal combustion engine 10. In the exemplary embodiment described herein, exhaust gas sensor may be an NOx sensor configured to detect an amount of NOx in the exhaust from internal combustion engine 10.

Turbocharger 40 is configured to use the heat and pressure of the exhaust gas of internal combustion engine 10 to drive a compressor 44 for compressing the intake air prior to being supplied to the engine. Specifically, exhaust gas passing a turbine 42 of turbocharger 40 rotates turbine 42, thereby decreasing in pressure and temperature. Compressor 44 is rotatably connected to turbine 42 via a common shaft 46 and driven by turbine 42.

Generally, an outlet of compressor 44 is fluidly connected to an inlet of intake manifold 22 via a compressor connection 21. As shown in Fig. 1, an outlet of compressor 44 is connected to the inlet of intake manifold 22 via a cooler 23. A throttle valve 27 arranged downstream of cooler 23 is configured to open or close the fluid connection between compressor connection 21 and intake manifold 22, thereby enabling or restricting a flow of the compressed intake air from compressor connection 21 into intake manifold 22.

During operation of internal combustion engine 10 in gas mode, the intake air is compressed and cooled before being supplied to cylinders 26A-26D. Within cylinders 26A-26D, further compression and heating of the mixture may be caused by movement of pistons 18 (see Fig. 2). Then, the mixture within the cylinders 26A-26D may be ignited, for example, by using injection device 90 for supplying a pilot injection of liquid fuel to initiate the combustion of the mixture at a desired ignition timing. It should be noted that herein the term "injection timing" may be used for the timing of the start of injection of the pilot fuel by the injection device 90, or for any other defined point in time during the injection. The produced exhaust gas is discharged via exhaust manifold 28. An outlet of exhaust manifold 28 is fluidly connected to an inlet of turbine 42. An outlet of turbine 42 may be fluidly connected to, for example, an exhaust gas treatment system (not shown).

Additionally, as indicated in Fig. 1, internal combustion engine 10 may be provided with a waste gate system including a waste gate connection 80 and a waste gate valve 82. Further, internal combustion engine 10 may include a blow-off system including a blow-off connection 66 and a blow-off valve 64. It should be appreciated that blow-off connection 66 and blow-off valve 64 may be provided with different configurations than the one shown in Fig. 1, if appropriate. Alternatively, one or more of these components may be omitted.

Turning now to Fig. 2, an exemplary embodiment of a control system 100 for adjusting an amount of injected liquid fuel and/or an injection timing of said liquid fuel is shown. The person skilled in the art will recognize that the exemplary cylinder 26 shown in Fig. 2 demonstrates the principles of the cylinders 26A-26D of Fig. 1. Therefore, the exemplary disclosed configuration shown in Fig. 2 also applies to the cylinders 26A-26D shown in Fig. 1.

Fig. 2 shows a schematic cross-sectional view of cylinder 26. Cylinder 26 defines a combustion chamber 16 and includes a piston 18. Crank-shaft 6 is connected to piston 18 via piston rod 8. Piston 18 is configured to reciprocate within cylinder 26.

Cylinder 26 is connected to intake manifold 22 (Fig. 1) via intake passage 24 and to exhaust manifold 28 via exhaust passage 37. Inlet valve 35 is disposed in intake passage 24, and exhaust valve 36 is disposed in exhaust passage 37. Gas admission valve 38 is provided to supply gaseous fuel to combustion chamber 16 of cylinder 26 in the gas mode. In the exemplary embodiment, gas admission valve 38 may be a solenoid-operated gas admission valve (SOGAV). Liquid fuel main injector 70 is provided to supply a main liquid fuel injection to combustion chamber 16 of cylinder 26 in the liquid fuel mode. For example, main injector 70 may be configured to receive a desired amount of liquid fuel from a fuel pump (not shown) associated with cylinder 26, and to inject the received liquid fuel at a desired main injection timing.

Inlet valve 35 is configured to supply compressed intake air to combustion chamber 16. Exhaust valve 36 is configured to discharge exhaust from combustion chamber 16 to exhaust manifold 28 after combustion.

Injection device 90 is configured to ignite the mixture of gaseous fuel and air (when operating in gas mode) or to improve the combustion of main liquid fuel, for example, diesel fuel (when operating in liquid fuel mode) inside combustion chamber 16 at a desired ignition timing. In the embodiments, injection device 90 is a pilot injector configured to inject a pilot amount of, for example, diesel fuel to ignite the mixture of gaseous fuel and air in the gas mode. Injection device 90 may further be used to inject a pilot amount of liquid fuel in the liquid fuel mode, for example, to assist the combustion of the main liquid fuel injected by liquid fuel main injector 70. In some exemplary embodiments, a pre-combustion chamber (not shown) may be provided in combustion chamber 16, and injection device 90 may be configured to ignite a small amount of fuel supplied to the pre-combustion chamber in order to initiate the combustion of the mixture of fuel and air in combustion chamber 16.

Control system 100 includes a sensor 60 associated with cylinder 26. Sensor 60 may be disposed at least in part within combustion chamber 16. In other exemplary embodiments, sensor 60 may be disposed outside of combustion chamber 16. Sensor 60 is configured to detect a parameter of the combustion in cylinder 26. In some embodiments, sensor 60 may be a pressure sensor configured to detect a cylinder pressure in cylinder 26. Sensor 60 may be any known pressure sensor and may be configured to detect the pressure within combustion chamber 16 in a known manner. In other embodiments, sensor 60 may be configured to detect temperature fluctuations within combustion chamber 16 or other parameters from which characteristics of the combustion in combustion chamber 16 can be derived. For example, sensor 60 may be an impact sound sensor configured to detect an impact sound propagating in engine block 20 during combustion in combustion chamber 16.

Control system 100 further includes a control unit 50. Control unit 50 is connected to sensor 60 via a communication line 54 and to gas admission valve 38 via a communication line 52. Control unit 50 is further connected to injection device 90 via a communication line 53 and to main injector 70 via a communication line 55. Control unit 50 is configured to control an ignition timing of the mixture in combustion chamber 16 via injection device 90 by injecting a predetermined amount of liquid fuel at a predetermined injection timing. Further, control unit 50 is configured to receive the results of the detection by sensor 60 and to determine at least one characteristic of the combustion in combustion chamber 16 from the received detection results.

Control unit 50 may be a single microprocessor or dual microprocessors that include means for controlling, among others, an operation of various components of combustion engine 10. Control unit 50 may be a general engine control unit (ECU) capable of controlling internal combustion engine 10 and/or its associated components. Control unit 50 may include all components required to run an application such as, for example, a memory, a secondary storage device, and a processor such as a central processing unit or any other means known in the art for controlling internal combustion engine 10 and its components. Various other known circuits may be associated with control unit 50, including power supply circuitry, signal conditioning circuitry, communication circuitry and other appropriate circuitry. Control unit 50 may analyze and compare received and stored data and, based on instructions and data stored in memory or input by a user, determine whether action is required. For example, control unit 50 may compare received values with target values stored in memory, and, based on the results of the comparison, transmit signals to one or more components to alter the operation status of the same.

Control unit 50 may include any memory device known in the art for storing data relating to operation of internal combustion engine 10 and its components. The data may be stored in the form of one or more maps that describe and/or relate, for example, the detection results from sensor 60 to a combustion profile of the combustion in combustion chamber 16. Each of the maps may be in the form of tables, graphs and/or equations, and may include a compilation of data collected from lab and/or field operation of internal combustion engine 10. The maps may be generated by performing instrumented tests on the operation of internal combustion engine 10 under various operating conditions while varying parameters associated therewith or performing various measurements. Control unit 50 may reference these maps and control operation of one component in response to the desired operation of another component.

In the embodiment, control unit 50 has one or more combustion profiles for cylinder 26 stored in the memory of the same, said combustion profiles being determined in advance for a standard or reference operating condition of internal combustion engine 10. For example, each reference combustion profile is determined under a reference operating condition that specifies one or more of a reference fuel quality of the gaseous fuel, a reference fuel quality of the liquid fuel, a reference ambient air temperature, a reference ambient air pressure, a reference humidity, a reference engine load, and a reference number of injections by injection device 90 with associated injection timings and injection amounts. For example, during testing of internal combustion engine 10, internal combustion engine 10 may be operated with standard fuel of known quality under standard or known ambient conditions such as air temperature, air pressure, humidity, etc. Under these standard conditions, injection timings and injection amounts for one or more injections by injection device 90 may be varied, until an optimum combustion is obtained. In some embodiments, NOx values associated with the combustion may be taken into account when determining the optimum number of injections and/or injection amounts. In this manner, one or more maps can be obtained that associate optimum injection timings and injection amounts with, for example, given ambient conditions, a given fuel quality, or a given engine load.

During operation of in the field, internal combustion engine 10 may be operated using a number of injections and corresponding injection amounts for a given ambient air temperature, ambient air pressure, humidity etc. as defined in one of the maps stored in the memory of control unit 50. Further, a corresponding reference combustion profile is selected in accordance with this current operating condition of internal combustion engine 10.

Next, one or more measurements relating to the combustion in combustion chamber 16 of cylinder 26 are performed. In the embodiment, for example, the measurement by pressure sensor 60 is used to determine at least one combustion parameter, for example, a start of combustion, a center of combustion and/or a combustion duration of the associated combustion event. It will be appreciated that in other embodiments other measurements may be used as an alternative or in addition to the cylinder pressure measurements. For example, a measurement of the exhaust temperature may be used to determine whether a combustion characteristic or parameter is in agreement with a desired combustion characteristic or parameter.

In particular, control unit 50 is configured to compare the at least one combustion parameter based on the at least one measurement to a desired or reference combustion parameter associated with the selected reference combustion profile. Further, control unit 50 is configured to determine whether the determined combustion parameter differs from the desired combustion parameter, for example, by more than a predetermined amount. If so, control unit 50 is configured to adjust an amount of liquid fuel injected by injection device 90 and/or an injection timing of the liquid fuel in a subsequent combustion cycle. This will be described in more detail with reference to Fig. 3.

As shown in Fig. 3, in one example, control unit 50 may be configured to control injection device 90 to inject a first amount of liquid fuel at a first injection timing t₁ in a combustion cycle of internal combustion engine 10 (solid line in Fig. 3). In the example shown in Fig. 3, the injection at timing t₁ is the only injection. It will be appreciated, however, that two or more injections may be performed, with the first amount of liquid fuel being defined by the total amount of liquid fuel injected in the plurality of injections.

Next, the cylinder pressure of cylinder 26 may be measured, and a combustion parameter or profile may be determined based on the measured cylinder pressure. For example, control unit 50 may be configured to determine the duration of combustion or the start of combustion.

In case control unit 50 determines that, for example, the duration of combustion exceeds the duration of combustion of the selected reference combustion profile by more than a predetermined amount, control unit 50 may be configured to increase the amount of ignition fuel that is injected in response to such a determination. For example, the increase in the amount of ignition fuel may be proportional to the difference. In one example, control unit 50 may be configured to increase the amount of liquid fuel injected at injection timing t₁ in order to reduce the duration of combustion to the duration of the selected reference combustion profile (dashed line in Fig. 3).

In another example, control unit 50 may determine the start of combustion from the measured cylinder pressure, and in case it is determined that the start of combustion is retarded by more than a predetermined amount with respect to the start of combustion associated with the reference combustion profile, control unit 50 may be configured to perform an additional injection using injection device 90 (dot-dashed line in Fig. 3). It is obvious that this also results in an increase in the total amount of liquid fuel that is injected by injection device 90 at timings t₁ and t₂. It will be readily appreciated that any appropriate combination of reducing/increasing a number of injections and reducing/increasing an amount of liquid fuel injected at a given injection timing can be used in order to take the appropriate measures for bringing the combustion profile or combustion parameter that is determined based on measurement in line with the desired reference combustion parameter or profile.

In some embodiments, control unit 50 may also be configured to use the NOx values determined by exhaust sensor 29 in order to perform further adjustments of the amount of liquid fuel injected by the injection device 90 and/or the injection timing(s) of the liquid fuel based at least in part on the measured NOx content. Further, in some embodiments, control unit 50 may be configured to increase a charge air pressure when the measured NOx content exceeds a predetermined upper NOx threshold, or to decrease the charge air pressure when the measured NOx content falls below a predetermined lower NOx threshold.

Generally, control unit 50 is configured to adjust the amount of liquid fuel and/or the injection timing(s) in a subsequent combustion cycle when the determined combustion parameter differs from the desired or reference combustion parameter, for example, by more than a predetermined amount. In other words, the cycle in which the adjusted amount of liquid fuel and/or the adjusted injection timing(s) are used is the combustion cycle immediately following the combustion cycle during which the combustion parameter was determined. However, in some embodiments, control unit 50 may be configured to perform said measurements over a plurality of combustion cycles, in order to eliminate excessive adjustments due to fluctuations in the measurements or in the operation of the engine, for example, during transients. For example, control unit 50 may be configured to perform the measurement and compare the determined combustion parameter to the desired combustion parameter over two to fifty combustion cycles, and only perform the adjustment when the combustion parameter differs from the desired combustion parameter by more than the predetermined amount in a predetermined number of combustion cycles, for example, three to eight combustion cycles.

### Industrial Applicability

The industrial applicability of the systems and methods for checking the ignition system in a gas or dual fuel internal combustion engine described herein will be readily appreciated from the foregoing discussion. An exemplary machine suited to the disclosure is a large internal combustion engine such as the engines of the series M46DF, M43DF, M32DF, M34DF, M27DF, M3x manufactured by Caterpillar Motoren GmbH & Co. KG, Kiel, Germany. Similarly, the systems and methods described herein can be adapted to a large variety of other gas or dual fuel engines used for various different tasks.

With the system of the present disclosure, it is possible to achieve a high combustion stability under various operating conditions of a gaseous fuel internal combustion engine. In particular, it is possible to find a balance between a reliable combustion and an amount of NOx emissions.

An exemplary method of operating such a gaseous fuel internal combustion engine is described in the following.

During operation of internal combustion engine 10, control unit 50 injects a first amount of liquid fuel via injection device 90 in a combustion cycle of internal combustion engine 10. For example, as shown in Fig. 3, control unit 50 injects a first amount of liquid fuel at a first injection timing t₁ to combust the mixture of gaseous fuel and air in combustion chamber 16 of cylinder 26.

During combustion of the mixture of gaseous fuel and air, pressure sensor 60 measures the cylinder pressure in combustion chamber 16. Based on this measurement, control unit 50 determines at least one combustion parameter associated with the combustion in combustion chamber 16. For example, control unit 50 may determine a duration of combustion or a start of combustion.

Next, control unit 50 compares the at least one combustion parameter to a desired combustion parameter associated with a selected reference combustion profile that has been determined in advance and for which the combustion is known to be optimum, for example, with respect to reliability of combustion and NOx emissions. Said reference combustion profile may be selected based, for example, on current ambient conditions under which internal combustion engine 10 operates, and/or based on a current engine load.

In case control unit 50 determines that the combustion parameter differs from the desired combustion parameter by more than a predetermined amount, control unit 50 adjusts at least one of an amount of liquid fuel supplied by injection device 90 and an injection timing of the liquid fuel in a subsequent combustion cycle of internal combustion engine 10. For example, as shown in Fig. 3, when control unit 50 determines that the DOC exceeds the DOC of the reference combustion profile by more than a predetermined amount, control unit 50 may increase the amount of ignition fuel supplied to cylinder 26 proportional to this difference. To this end, control unit 50 may increase the amount of liquid fuel injected at injection timing t₁, as shown by the dashed line in Fig. 3. In another example, when control unit 50 determines that the SOC is retarded with respect to the reference SOC, control unit 50 may control injection device 90 to perform an additional injection at injection timing t₂ (dot-dashed line in Fig. 2). In some embodiments, control unit 50 may be configured to use an arbitrary combination of increasing or decreasing injection amounts at one or more injection timings, and increasing/decreasing the number of injections at different injection timings.

Using such adjustments, the at least one combustion parameter (or the associated combustion profile) may be brought in line with the desired combustion parameter or profile during operation of internal combustion engine 10.

Although the present embodiment has been described as using the cylinder pressure sensor 60 associated with each cylinder or the pluralities of cylinders of internal combustion engine 10 in order to determine the at least one combustion parameter, in other embodiments, different measurements may be used to determine said parameter. For example, it may be possible to use the exhaust gas temperature measured by exhaust sensor 29 to derive the parameter.

It will be appreciated that the foregoing description provides examples of the disclosed systems and methods. However, it is contemplated that other implementations of the disclosure may differ in detail from the foregoing examples. All references to the disclosure or examples thereof are intended to reference the particular example being discussed at that point and are not intended to imply any limitation as to the general disclosure.

Recitation of ranges of values herein are merely intended to serve as a shorthand method for referring individually to each separate value falling within the range, unless otherwise indicated herein, and each separate value is incorporated into the specification as if it were individually recited herein. All method steps described herein can be performed in any suitable order, unless otherwise indicated or clearly contradicted by the context.

Although the preferred embodiments of the present disclosure have been described herein, improvements and modifications may be incorporated without departing from the scope of the following claims.

## Claims

1. A method of operating a gaseous fuel internal combustion engine (10), the internal combustion engine comprising an injection device (90) configured to supply a pilot injection of liquid fuel to a cylinder (26) of the internal combustion engine (10) for combustion with a mixture of gaseous fuel and air in a combustion chamber (16) of the cylinder (26), the method comprising:
introducing a mixture of gaseous fuel and air into the combustion chamber (16);
injecting a first amount of liquid fuel into the combustion chamber (16) via the injection device (90) in a combustion cycle of the internal combustion engine (10);
performing at least one measurement relating to the combustion of the first amount of liquid fuel and the mixture of gaseous fuel and air in the combustion chamber (16);
determining at least one combustion parameter based on the at least one measurement;
comparing the combustion parameter to a desired combustion parameter; and
adjusting at least one of an amount of liquid fuel injected by the injection device (90) and an injection timing of the liquid fuel in a subsequent combustion cycle when the combustion parameter differs from the desired combustion parameter by more than a predetermined amount, **characterised in that** the step of determining the at least one combustion parameter includes determining a combustion profile for the cylinder (26) based on the at least one measurement,
wherein the step of comparing the combustion parameter to a desired combustion parameter includes comparing the combustion profile to a reference combustion profile determined in advance for a reference operating condition of the internal combustion engine (10) and
wherein a plurality of reference combustion profiles is provided, the method further comprising selecting one of the plurality of reference combustion profiles based on a current operating condition of the internal combustion engine (10), the current operating condition specifying at least one of a fuel quality of the gaseous fuel, a fuel quality of the liquid fuel, an ambient air temperature, an ambient air pressure, an ambient air humidity, and an engine load.

2. The method of claim 1, further comprising:
adjusting a number of injections by the injection device (90) in the subsequent combustion cycle when the combustion parameter differs from the desired combustion parameter by more than the predetermined amount.

3. The method of claim 2, further comprising:
determining a start of combustion in the cylinder (26) based on the at least one measurement; and
increasing the number of injections by the injection device (90) in the subsequent combustion cycle when the start of combustion is retarded with respect to a desired start of combustion.

4. The method of any one of claims 1 to 3, further comprising:
determining a duration of combustion in the cylinder (26) based on the at least one measurement; and
increasing the amount of liquid fuel injected by the injection device (90) in the subsequent combustion cycle when the duration of combustion is greater than a desired duration of combustion.

5. The method of any one of claims 1 to 4, further comprising determining a center of combustion based on the at least one measurement; and
adjusting the at least one of an amount of liquid fuel injected by the injection device (90) and an injection timing of the liquid fuel in a subsequent combustion cycle when the center of combustion deviates from a desired center of combustion.

6. The method of claim 1 , wherein the reference operating condition specifies at least one of a fuel quality of the gaseous fuel, a fuel quality of the liquid fuel, an ambient air temperature, an ambient air pressure, an ambient air humidity, and an engine load.

7. The method of any one of claims 1 to 6, wherein the at least one measurement includes a cylinder pressure measurement and/or an in-cylinder temperature measurement.

8. The method of any one of claims 1 to 7, wherein the at least one measurement includes an exhaust gas temperature measurement.

9. The method of any one of claims 1 to 8, further comprising:
measuring an NOx content in the exhaust gas from the cylinder (26); and
adjusting the at least one of an amount of liquid fuel injected by the injection device (90) and an injection timing of the liquid fuel based at least in part on the measured NOx content.

10. The method of claim 9, further comprising:
increasing a charge air pressure when the measured NOx content exceeds a predetermined upper NOx threshold and/or decreasing the charge air pressure when the measured NOx content falls below a predetermined lower NOx threshold.

11. The method of any one of claims 1 to 10, further comprising:
performing the at least one measurement and comparing the combustion parameter to the desired combustion parameter over a plurality of combustion cycles; and
adjusting the at least one of the amount of liquid fuel supplied by the injection device (90) and a timing of supplying the liquid fuel only when the combustion parameter differs from the desired combustion parameter by more than the predetermined amount in a predetermined number of combustion cycles.

12. A computer program comprising computer-executable instructions which, when executed by a computer, cause the computer to perform the steps of the method of any one of claims 1 to 11.

13. An internal combustion engine (10) comprising:
an engine block (20) defining at least in part a cylinder (26);
an injection device (90) configured to supply a pilot injection of liquid fuel to the cylinder (26) for combustion with a mixture of gaseous fuel and air in a combustion chamber (16) of the cylinder (26); and
a control unit (50) configured to:
inject a first amount of liquid fuel via the injection device (90) in a combustion cycle of the internal combustion engine (10);
perform at least one measurement relating to the combustion of the first amount of liquid fuel and the mixture of gaseous fuel and air in the combustion chamber (16);
determine at least one combustion parameter based on the at least one measurement; compare the combustion parameter to a desired combustion parameter; and
adjust at least one of an amount of liquid fuel injected by the injection device (90) and an injection timing of the liquid fuel in a subsequent combustion cycle when the combustion parameter differs from the desired combustion parameter by more than a predetermined amount,
**characterised in that** the control unit (50) is further configured to: determine a combustion profile for the cylinder (26) based on the at least one measurement; and
compare the combustion profile to a reference combustion profile determined in advance for a reference operating condition of the internal combustion engine (10),
and wherein a plurality of reference combustion profiles is provided, the control unit (50) is further configured to select one of the plurality of reference combustion profiles based on a current operating condition of the internal combustion engine (10), the current operating condition specifying at least one of a fuel quality of the gaseous fuel, a fuel quality of the liquid fuel, an ambient air temperature, an ambient air pressure, an ambient air humidity, and an engine load.

## Patentansprüche

1. Verfahren zum Betreiben eines Verbrennungsmotors (10) mit gasförmigem Kraftstoff, wobei der Verbrennungsmotor eine Einspritzvorrichtung (90) umfasst, die konfiguriert ist, einem Zylinder (26) des Verbrennungsmotors (10) eine Voreinspritzung eines flüssigen Kraftstoffs zur Verbrennung mit einer Mischung aus gasförmigem Kraftstoff und Luft in einer Brennkammer (16) des Zylinders (26) zuzuführen, wobei das Verfahren umfasst:
Einführen einer Mischung aus gasförmigem Kraftstoff und Luft in die Brennkammer (16);
Einspritzen einer ersten Menge flüssigen Kraftstoffs in den Brennraum (16) über die Einspritzvorrichtung (90) in einem Verbrennungszyklus des Verbrennungsmotors (10);
Durchführen mindestens einer Messung in Bezug auf die Verbrennung der ersten Menge an flüssigem Kraftstoff und des Gemischs aus gasförmigem Kraftstoff und Luft in der Brennkammer (16);
Bestimmen mindestens eines Verbrennungsparameters basierend auf der mindestens einen Messung;
Vergleichen des Verbrennungsparameters mit einem gewünschten Verbrennungsparameter; und
Einstellen mindestens eines von einer Menge an flüssigem Kraftstoff, die von der Einspritzvorrichtung (90) eingespritzt wird, und einem Einspritzzeitpunkt des flüssigen Kraftstoffs in einem nachfolgenden Verbrennungszyklus, wenn sich der Verbrennungsparameter von dem gewünschten Verbrennungsparameter um mehr als einen vorbestimmten Betrag unterscheidet, **dadurch gekennzeichnet, dass** der Schritt des Bestimmens des mindestens einen Verbrennungsparameters das Bestimmen eines Verbrennungsprofils für den Zylinder (26) basierend auf der mindestens einen Messung umfasst,
wobei der Schritt des Vergleichens des Verbrennungsparameters mit einem gewünschten Verbrennungsparameter das Vergleichen des Verbrennungsprofils mit einem Referenzverbrennungsprofil umfasst, das im Voraus für einen Referenzbetriebszustand des Verbrennungsmotors (10) bestimmt wurde, und
wobei eine Vielzahl von Referenzverbrennungsprofilen bereitgestellt wird, wobei das Verfahren ferner das Auswählen eines der Vielzahl von Referenzverbrennungsprofilen basierend auf einem aktuellen Betriebszustand des Verbrennungsmotors (10) umfasst, wobei der aktuelle Betriebszustand mindestens eines von einer Kraftstoffqualität des gasförmigen Kraftstoffs, einer Kraftstoffqualität des flüssigen Kraftstoffs, einer Umgebungslufttemperatur, einem Umgebungsluftdruck, einer Umgebungsluftfeuchtigkeit und einer Motorlast spezifiziert.

2. Verfahren nach Anspruch 1, ferner umfassend:
Einstellen einer Anzahl von Einspritzungen durch die Einspritzvorrichtung (90) in dem nachfolgenden Verbrennungszyklus, wenn sich der Verbrennungsparameter von dem gewünschten Verbrennungsparameter um mehr als den vorbestimmten Betrag unterscheidet.

3. Verfahren nach Anspruch 2, ferner umfassend:
Bestimmen eines Verbrennungsbeginns in dem Zylinder (26) basierend auf der mindestens einen Messung; und
Erhöhen der Anzahl von Einspritzungen durch die Einspritzvorrichtung (90) in dem nachfolgenden Verbrennungszyklus, wenn der Verbrennungsbeginn in Bezug auf einen gewünschten Verbrennungsbeginn verzögert ist.

4. Verfahren nach einem der Ansprüche 1 bis 3, ferner umfassend:
Bestimmen einer Verbrennungsdauer in dem Zylinder (26) basierend auf der mindestens einen Messung; und
Erhöhen der Menge an flüssigem Kraftstoff, die durch die Einspritzvorrichtung (90) in dem nachfolgenden Verbrennungszyklus eingespritzt wird, wenn die Verbrennungsdauer länger als eine gewünschte Verbrennungsdauer ist.

5. Verfahren nach einem der Ansprüche 1 bis 4, ferner umfassend das Bestimmen eines Verbrennungsmittelpunkts basierend auf der mindestens einen Messung; und
Einstellen der mindestens einen von einer Menge an flüssigem Kraftstoff, die von der Einspritzvorrichtung (90) eingespritzt wird, und einem Einspritzzeitpunkt des flüssigen Kraftstoffs in einem nachfolgenden Verbrennungszyklus, wenn der Verbrennungsmittelpunkt von einem gewünschten Verbrennungsmittelpunkt abweicht.

6. Verfahren nach Anspruch 1, wobei der Referenzbetriebszustand mindestens eines von einer Kraftstoffqualität des gasförmigen Kraftstoffs, einer Kraftstoffqualität des flüssigen Kraftstoffs, einer Umgebungslufttemperatur, einem Umgebungsluftdruck, einer Umgebungsluftfeuchtigkeit und einer Motorlast spezifiziert.

7. Verfahren nach einem der Ansprüche 1 bis 6, wobei die mindestens eine Messung eine Zylinderdruckmessung und/oder eine Zylindertemperaturmessung umfasst.

8. Verfahren nach einem der Ansprüche 1 bis 7, wobei die mindestens eine Messung eine Abgastemperaturmessung umfasst.

9. Verfahren nach einem der Ansprüche 1 bis 8, ferner umfassend:
Messen eines NOx-Gehalts im Abgas aus dem Zylinder (26); und
Einstellen des mindestens einen von einer Menge an flüssigem Kraftstoff, die von der Einspritzvorrichtung (90) eingespritzt wird, und einem Einspritzzeitpunkt des flüssigen Kraftstoffs zumindest teilweise basierend auf dem gemessenen NOx-Gehalt.

10. Verfahren nach Anspruch 9, ferner umfassend:
Erhöhen eines Ladeluftdrucks, wenn der gemessene NOx-Gehalt einen vorbestimmten oberen NOx-Schwellenwert überschreitet, und/oder Verringern des Ladeluftdrucks, wenn der gemessene NOx-Gehalt unter einen vorbestimmten unteren NOx-Schwellenwert fällt.

11. Verfahren nach einem der Ansprüche 1 bis 10, ferner umfassend:
Durchführen der mindestens einen Messung und Vergleichen des Verbrennungsparameters mit dem gewünschten Verbrennungsparameter über eine Vielzahl von Verbrennungszyklen; und
Einstellen des mindestens einen von der Menge an flüssigem Kraftstoff, die von der Einspritzvorrichtung (90) zugeführt wird, und einem Zeitpunkt der Zufuhr des flüssigen Kraftstoffs nur dann, wenn sich der Verbrennungsparameter von dem gewünschten Verbrennungsparameter um mehr als den vorbestimmten Betrag in einer vorbestimmten Anzahl von Verbrennungszyklen unterscheidet.

12. Computerprogramm, umfassend computerausführbare Anweisungen, die, wenn sie auf einem Computer ausgeführt werden, bewirken, dass der Computer die Schritte des Verfahrens nach einem der Ansprüche 1 bis 11 ausführt.

13. Verbrennungsmotor (10), umfassend:
einen Motorblock (20), der zumindest teilweise einen Zylinder (26) definiert;
eine Einspritzvorrichtung (90), die konfiguriert ist, um dem Zylinder (26) eine Voreinspritzung eines flüssigen Kraftstoffs zur Verbrennung mit einem Gemisch von gasförmigem Kraftstoff und Luft in einer Brennkammer (16) des Zylinders (26) zuzuführen; und
eine Steuereinheit (50), die konfiguriert ist zum:
Einspritzen einer ersten Menge flüssigen Kraftstoffs über die Einspritzvorrichtung (90) in einem Verbrennungszyklus des Verbrennungsmotors (10);
Durchführen mindestens einer Messung in Bezug auf die Verbrennung der ersten Menge an flüssigem Kraftstoff und des Gemischs aus gasförmigem Kraftstoff und Luft in der Brennkammer (16);
Bestimmen mindestens eines Verbrennungsparameters basierend auf der mindestens einen Messung;
Vergleichen des Verbrennungsparameters mit einem gewünschten Verbrennungsparameter; und
Einstellen mindestens eines von einer Menge an flüssigem Kraftstoff, die von der Einspritzvorrichtung (90) eingespritzt wird, und einem Einspritzzeitpunkt des flüssigen Kraftstoffs in einem nachfolgenden Verbrennungszyklus, wenn sich der Verbrennungsparameter von dem gewünschten Verbrennungsparameter um mehr als einen vorbestimmten Betrag unterscheidet,
**dadurch gekennzeichnet, dass** die Steuereinheit (50) ferner konfiguriert ist zum:
Bestimmen eines Verbrennungsprofils für den Zylinder (26) basierend auf der mindestens einen Messung; und
Vergleichen des Verbrennungsprofils mit einem Referenzverbrennungsprofil, das im Voraus für einen Referenzbetriebszustand des Verbrennungsmotors (10) bestimmt wurde,
und wobei eine Vielzahl von Referenzverbrennungsprofilen bereitgestellt wird, die Steuereinheit (50) ferner konfiguriert ist, eines der Vielzahl von Referenzverbrennungsprofilen basierend auf einem aktuellen Betriebszustand des Verbrennungsmotors (10) auszuwählen, wobei der aktuelle Betriebszustand mindestens eines von einer Kraftstoffqualität des gasförmigen Kraftstoffs, einer Kraftstoffqualität des flüssigen Kraftstoffs, einer Umgebungslufttemperatur, einem Umgebungsluftdruck, einer Umgebungsluftfeuchtigkeit und einer Motorlast spezifiziert.

## Revendications

1. Procédé de fonctionnement d'un moteur à combustion interne à combustible gazeux (10), le moteur à combustion interne comprenant un dispositif d'injection (90) configuré pour fournir une injection pilote de combustible liquide à un cylindre (26) du moteur à combustion interne (10) pour combustion avec un mélange de combustible gazeux et d'air dans une chambre de combustion (16) du cylindre (26), le procédé comprenant :
l'introduction d'un mélange de combustible gazeux et d'air dans la chambre de combustion (16) ;
l'injection d'une première quantité de combustible liquide dans la chambre de combustion (16) via le dispositif d'injection (90) dans un cycle de combustion du moteur à combustion interne (10) ;
la réalisation d'au moins une mesure relative à la combustion de la première quantité de combustible liquide et du mélange de combustible gazeux et d'air dans la chambre de combustion (16) ;
la détermination d'au moins un paramètre de combustion sur la base de l'au moins une mesure ;
la comparaison du paramètre de combustion à un paramètre de combustion souhaité ; et
l'ajustement d'au moins l'un parmi une quantité de combustible liquide injecté par le dispositif d'injection (90) et d'un calage de l'injection du combustible liquide dans un cycle de combustion successif lorsque le paramètre de combustion diffère du paramètre de combustion souhaité de plus d'une quantité prédéterminée, **caractérisé en ce que** l'étape consistant à déterminer l'au moins un paramètre de combustion inclut la détermination d'un profil de combustion pour le cylindre (26) en se basant sur l'au moins une mesure,
dans lequel l'étape de comparaison du paramètre de combustion à un paramètre de combustion souhaité inclut la comparaison du profil de combustion à un profil de combustion de référence déterminé à l'avance pour une condition de fonctionnement de référence du moteur à combustion interne (10) et
dans lequel une pluralité de profils de combustion de référence est fournie, le procédé comprenant en outre la sélection de l'un de la pluralité de profils de combustion de référence sur la base d'une condition de fonctionnement effective du moteur à combustion interne (10), la condition de fonctionnement effective spécifiant au moins l'une d'une qualité de combustible du combustible gazeux, d'une qualité de combustible du combustible liquide, d'une température de l'air ambiant, d'une pression de l'air ambiant, d'une humidité de l'air ambiant et d'une charge de moteur.

2. Procédé selon la revendication 1, comprenant en outre :
l'ajustement d'un certain nombre d'injections par le dispositif d'injection (90) dans le cycle de combustion successif lorsque le paramètre de combustion diffère du paramètre de combustion souhaité de plus de la quantité prédéterminée.

3. Procédé selon la revendication 2, comprenant en outre :
la détermination d'un début de combustion dans le cylindre (26) en fonction de l'au moins une mesure ; et
l'augmentation du nombre d'injections par le dispositif d'injection (90) dans le cycle de combustion successif lorsque le début de la combustion est retardé par rapport à un début de combustion souhaité.

4. Procédé selon l'une quelconque des revendications 1 à 3, comprenant en outre :
la détermination d'une durée de combustion dans le cylindre (26) en fonction de l'au moins une mesure ; et
l'augmentation de la quantité de combustible liquide injectée par le dispositif d'injection (90) dans le cycle de combustion subséquent lorsque la durée de combustion est supérieure à une durée de combustion souhaitée.

5. Procédé selon l'une quelconque des revendications 1 à 4, comprenant en outre la détermination d'un centre de combustion sur la base de l'au moins une mesure ; et
l'ajustement de l'au moins une d'une quantité de combustible liquide injectée par le dispositif d'injection (90) et d'un calage d'injection du combustible liquide dans un cycle de combustion successif lorsque le centre de combustion s'écarte d'un centre de combustion souhaité.

6. Procédé selon la revendication 1, dans lequel la condition de fonctionnement de référence spécifie au moins l'une d'une qualité de combustible du combustible gazeux, d'une qualité de combustible du combustible liquide, d'une température de l'air ambiant, d'une pression de l'air ambiant, d'une humidité de l'air ambiant et d'une charge de moteur.

7. Procédé selon l'une quelconque des revendications 1 à 6, dans lequel l'au moins une mesure inclut une mesure de pression de cylindre et/ou une mesure de température dans le cylindre.

8. Procédé selon l'une quelconque des revendications 1 à 7, dans lequel l'au moins une mesure inclut une mesure de température des gaz d'échappement.

9. Procédé selon l'une quelconque des revendications 1 à 8, comprenant en outre :
la mesure d'une teneur en NOx dans les gaz d'échappement provenant du cylindre (26) ; et
l'ajustement de l'au moins une d'une quantité de combustible liquide injectée par le dispositif d'injection (90) et d'un calage d'injection du combustible liquide en se basant au moins en partie sur la teneur mesurée en NOx.

10. Procédé selon la revendication 9, comprenant en outre :
l'augmentation d'une pression d'air de charge lorsque la teneur mesurée en NOx dépasse un seuil de NOx supérieur prédéterminé et/ou la diminution de la pression d'air de charge lorsque la teneur mesurée en NOx tombe en dessous d'un seuil de NOx inférieur prédéterminé.

11. Procédé selon l'une quelconque des revendications 1 à 10, comprenant en outre :
l'exécution de l'au moins une mesure et la comparaison du paramètre de combustion au paramètre de combustion souhaité sur une pluralité de cycles de combustion ; et
l'ajustement de l'au moins une de la quantité de combustible liquide fournie par le dispositif d'injection (90) et d'un calage d'alimentation du combustible liquide uniquement lorsque le paramètre de combustion diffère du paramètre de combustion souhaité de plus de la quantité prédéterminée dans un nombre prédéterminé de cycles de combustion.

12. Programme informatique comprenant des instructions exécutables par ordinateur qui, lorsqu'elles sont exécutées sur un ordinateur, amènent l'ordinateur à réaliser les étapes du procédé selon l'une quelconque des revendications 1 à 11.

13. Moteur à combustion interne (10), comprenant :
un bloc moteur (20) définissant au moins en partie un cylindre (26) ;
un dispositif d'injection (90) configuré pour fournir une injection pilote de combustible liquide au cylindre (26) pour une combustion avec un mélange de combustible gazeux et d'air dans une chambre de combustion (16) du cylindre (26) ; et
une unité de commande (50) configurée pour :
injecter une première quantité de combustible liquide par l'intermédiaire du dispositif d'injection (90) dans un cycle de combustion du moteur à combustion interne (10) ;
effectuer au moins une mesure relative à la combustion de la première quantité de combustible liquide et du mélange de combustible gazeux et d'air dans la chambre de combustion (16) ;
déterminer au moins un paramètre de combustion sur la base de l'au moins une mesure ;
comparer le paramètre de combustion à un paramètre de combustion souhaité ; et
ajuster au moins l'une d'une quantité de combustible liquide injectée par le dispositif d'injection (90) et d'un calage d'injection du combustible liquide dans un cycle de combustion successif lorsque le paramètre de combustion diffère du paramètre de combustion souhaité de plus d'une quantité prédéterminée,
**caractérisé en ce que** l'unité de commande (50) est en outre configurée pour :
déterminer un profil de combustion pour le cylindre (26) sur la base de l'au moins une mesure ; et
comparer le profil de combustion à un profil de combustion de référence déterminé à l'avance pour une condition de fonctionnement de référence du moteur à combustion interne (10),
et dans lequel une pluralité de profils de combustion de référence est fournie, l'unité de commande (50) est en outre configurée pour sélectionner l'un de la pluralité de profils de combustion de référence sur la base d'une condition de fonctionnement effective du moteur à combustion interne (10), la condition de fonctionnement effective spécifiant au moins l'une d'une qualité de combustible du combustible gazeux, d'une qualité de combustible du combustible liquide, d'une température de l'air ambiant, d'une pression de l'air ambiant, d'une humidité de l'air ambiant et d'une charge de moteur.
